# EUROPEAN PATENT SPECIFICATION

(11) **EP 4 353 857 B1**
(45) Date of publication and mention of the grant of the patent: **19.11.2025**
(21) Application number: 22810977.3
(22) Date of filing: 24.03.2022
(51) Int. Cl.: C22C 19/05, B23K 35/30

(54) **NICKEL BRAZING MATERIAL HAVING EXCELLENT WET SPREADING PROPERTY**
NICKELLÖTMATERIAL MIT HERVORRAGENDER NASSVERTEILUNGSEIGENSCHAFT
MATÉRIAU DE BRASAGE AU NICKEL AYANT UNE EXCELLENTE PROPRIÉTÉ D'ÉTALEMENT HUMIDE

(30) Priority: 28.05.2021 JP 2021089923
(43) Date of publication of application: 17.04.2024
(73) Proprietor: Fukuda Metal Foil & Powder Co., Ltd., Kyoto 600-8435 (JP)
(72) Inventor: HAMADA, Yukitaka, Kyoto-shi Kyoto 607-8305 (JP); NISHIMURA, Shinichi, Kyoto-shi Kyoto 607-8305 (JP)
(74) Representative: Abitz & Partner
(86) International application number: PCT/JP2022/013971
(87) International publication number: WO 2022/249701

(56) References cited:
- WO-A1-2012/035829
- WO-A1-2015/156066
- WO-A1-2015/156066
- CN-A- 102 941 418
- JP-A- 2009 545 451
- JP-A- 2011 501 700
- JP-A- 2018 183 790

## Description

### TECHNICAL FIELD

The present invention relates to a brazing filler metal which is used for heat exchanger applications such as general-purpose heat exchangers, water heaters, and waste heat recovery devices, and which is suitable for joining various stainless steel parts, and has good corrosion resistance, more particularly, relates to a nickel brazing filler metal having a lower melting temperature as compared with general-purpose nickel brazing filler metals and having excellent wettability.

### BACKGROUND TECHNOLOGY

Conventionally, in stainless steel heat exchangers used for refrigerant evaporation, condensers, and water heaters, etc., nickel brazing filler metal is used in environments where oxidation resistance and corrosion resistance are required. In addition to BNi2 and BNi5 specified in JIS Z 3265: 1998 "Nickel Brazing Filler Metals", general-purpose nickel brazing filler metals for joining various stainless steel parts include, for example, Ni-Cr-P-Si-based brazing filler metal described in the following Patent Document 1.

In recent years, there has been a strong demand to reduce energy costs during brazing process, and efforts are being made to lower the brazing temperature. Therefore, there is a demand for a nickel brazing filler metal with a melting temperature lower than that of general-purpose products. In view of such circumstances, all of BNi2, BNi5, and the Ni-Cr-P-Si-based brazing filler metal described in Patent Document 1 have a melting temperature exceeding 1000°C, and sufficient wettability cannot be obtained when the brazing temperature is lowered.

In order to solve such problems, the application of BNi6 and BNi7 specified in JIS Z 3265: 1998 "Nickel Brazing Filler Metals", which have a low melting temperature, and BNi12 in AWS A5.8/A5.8M:2004 has been studied. In addition, in recent years, for example, new brazing filler metals having low melting temperatures as described in the following Patent Documents 2 to 7 have been proposed.

However, both BNi6 and BNi7 have the problem of insufficient corrosion resistance. BNi12 is excellent in corrosion resistance and has a liquidus temperature of less than 1000°C, but has a problem of poor wettability compared to BNi6 and BNi7. Examples of Patent Documents 2 to 7 below describe brazing filler metals having a melting temperature lower than that of general-purpose nickel brazing filler metals. However, in addition to the case where the liquidus temperature exceeds 1000°C, and the case where the wettability is not sufficiently satisfactory even if the melting temperature is low, there are problems such as insufficient corrosion resistance.

As described above, the general-purpose brazing filler metals that have been used up to now and the nickel brazing filler metals described in Patent Documents 1 to 7 have the above-mentioned problems. At present, no nickel brazing filler metal having good corrosion resistance and an ability to lower the brazing temperature (sufficiently large wettability) has been proposed.

### PRIOR ART DOCUMENTS

### PATENT DOCUMENT

Patent Document 1: JP 3168158 B
Patent Document 2: JP 2007-75867 A
Patent Document 3: JP 2009-202198 A
Patent Document 4: JP 2011-110575 A
Patent Document 5: JP 2012-55914 A
Patent Document 6: WO 2015/156066
Patent Document 7: JP 2017-131968 A

### SUMMARY OF THE INVENTION

### PROBLEM TO BE SOLVED BY THE INVENTION

In recent years, there has been a strong demand for reducing energy costs during brazing process for brazing stainless steel heat exchangers used for refrigerant evaporation, condensers, and water heaters applications. Therefore, a nickel brazing filler metal with good corrosion resistance and a melting temperature capable of lowering the brazing temperature is required, and the development of nickel brazing filler metals that satisfies these properties has become an issue.

An object of the present invention is to solve the above-mentioned problems in the prior art, and to provide a nickel brazing filler metal having excellent corrosion resistance and showing sufficiently large wettability even at lower brazing temperatures as compared with conventional products.

### MEANS FOR SOLVING PROBLEM

In the present invention, in a study of an alloy composition for developing a nickel brazing filler metal which has a melting temperature that can lower the brazing temperature, has wettability, and has excellent corrosion resistance, the following target values have been set, and the conditions have been examined to satisfy all of these target values. (target value)
(1) Melting temperature [liquidus temperature] → 1000°C or less
(2) Wettability [Wettability spreading coefficient] → 10 or more
(3) Corrosion resistance [corrosion weight loss with sulfuric acid] → 0.50 mg/m² · s or less

The alloy (nickel brazing filler metal) of the present invention, which satisfies all of the above target values, is characterized by that the alloy has a melting temperature of 1000°C or less, has corrosion resistance against acids, and has a composition of 8.0 to 19.0 mass% of Cr, 7.0 to 10.5 mass% of P, 0.1 to 1.5 mass% of B, 2.0 to 8.0 mass% of Cu, wherein a content of Mo is 10.0 mass% or less, a content of Si is 2.5 mass% or less, the alloy optionally further containing one or more elements selected from the group consisting of Co, Fe and Mn as elements that do not adversely affect the characteristics of the alloy, and the content of Co being 5.0 mass% or less, the content of Fe being 3.0 mass% or less, the content of Mn being 3.0 mass% or less, and the total content of Co, Fe and Mn being 8.0 mass% or less, and the remainders are Ni and unavoidable impurities.

Here, the unavoidable impurities mean impurities that are not intentionally added but are inevitably mixed in the manufacturing process of each raw material. Such impurities include Al, C, Ti, Mg, S, O, N, V, Zr, and Sn, etc., and the sum of these is usually 0.3 mass% or less, which does not affect the action of the present invention.

In the present invention, the reasons for limiting the range of each component as described above will be described below.

Cr dissolves in a Ni solid solution and improves the corrosion resistance of the alloy, but if the content is less than 8.0 mass%, a sufficient effect cannot be obtained. On the other hand, if it exceeds 19.0 mass%, the melting temperature rises, and the Wettability to the base material deteriorates during the brazing process, thereby lowering the brazing productivity. For this reason, the content of Cr is set within the range of 8.0 to 19.0 mass%.

P has the effect of lowering the melting temperature of the alloy through a eutectic reaction with Ni, and also improves fluidity to bring good Wettability on a stainless steel substrate, but if the content is less than 7.0 mass%, a sufficient effect cannot be obtained. On the other hand, if the content exceeds 10.5 mass%, a hypereutectic composition is formed, so that the melting temperature rises and the Wettability deteriorates. Therefore, the content of P is set within the range of 7.0 to 10.5 mass%.

Similar to P, B has the effect of lowering the melting temperature of the alloy through a eutectic reaction with Ni, and also exerts a flux action to improve brazing productivity, but if the content is less than 0.1 mass%, a sufficient effect cannot be obtained. On the other hand, if the content exceeds 1.5 mass%, a compound with Cr is formed and the melting temperature rises significantly. Therefore, the content of B is set within the range of 0.1 to 1.5 mass%.

Cu dissolves in a Ni solid solution and contributes to lowering the melting temperature and improves corrosion resistance, but if the content is less than 2.0 mass%, a sufficient effect cannot be obtained, and if the content exceeds 8.0 mass%, the melting temperature rises, therefore, the content of Cu is set within the range of 2.0 to 8.0 mass%.

Mo dissolves in a Ni solid solution and contributes to lowering the melting temperature, and has the effect of improving corrosion resistance, and may be contained optionally. But if the content exceeds 10.0 mass%, the melting temperature rises and the Wettability is lowered, therefore, the content of Mo is set within the range of 10.0 mass% or less.

Similar to P and B, Si has the effect of lowering the melting temperature of the alloy through a eutectic reaction with Ni, and also has the effect of improving brazing productivity by exhibiting a flux action, and may be contained optionally. But if the Si content exceeds 2.5 mass%, a hypereutectic composition is formed, so that the melting temperature rises and the Wettability is lowered. Therefore, the content of Si is set within the range of 2.5 mass% or less.

In addition, the nickel brazing filler metal of the present invention may contain 5.0 mass% or less of Co, 3.0 mass% or less of Fe, and 3.0 mass% or less of Mn as elements that do not adversely affect the characteristics. These components may be blended alone or in combination, and the reason why the blending ratio of each component is limited to the above range is that the Wettability is lowered when the content of each of Co, Fe and Mn exceeds the upper limit of the range. In the present invention, the upper limit of the sum of Co, Fe and Mn is set at 8.0 mass% in order to satisfy all of the target values of corrosion resistance, material strength, and melting temperature. In the present invention, the upper limit of the above sum is particularly preferably 4.0 mass% or less.

The content of Ni in the nickel brazing filler metal can be 60 to 80 mass%.

### EFFECT OF THE INVENTION

The nickel brazing filler metal of the present invention has a liquidus temperature of 1000°C or less and has excellent Wettability, so it is possible to lower the brazing temperature (energy cost), and it is effective in application to stainless steel heat exchangers used for evaporation of refrigerants, condensers, and water heaters.

### BRIEF DESCRIPTION OF THE DRAWING

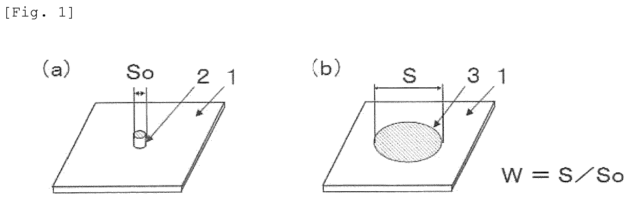

FIG. 1 is a schematic diagram for explaining a Wettability test of a brazing filler metal.

### MODE FOR CARRYING OUT THE INVENTION

The nickel brazing filler metal of the present invention can be obtained by the method in which a feedstock metal prepared by adjusting and blending Ni as a base with Cr, P, B, Cu, Mo and Si as additive components in a predetermined mass%, and if necessary, adding predetermined amounts of Co, Fe, and Mn, etc., is completely melted in a crucible of a melting furnace, and then the molten alloy is formed into a powder by an atomizing method or a melt pulverization method, or is cast into a predetermined mold to form a rod-shaped or plate-shaped casting.

In particular, in case of alloy powder produced by the atomization method, various methods such as a method of spraying (dispersing) binder and powder on the surface of base material, a method of applying a paste obtained by mixing binder and powder, a method of processing into a sheet or foil form, and a method of providing by thermal-spraying powder, can be optionally selected as a method for providing the nickel brazing filler metal of the present invention on the stainless steel base material after adjusting a particle size suitable for the intended construction method.

### EXAMPLES

The nickel brazing filler metal of the present invention (example alloy) adjusted and blended as described above and the nickel brazing filler metal (comparative example alloy) having a composition outside the composition range defined in claim 1 of the present application were melted, and liquidus temperature, braze spreading coefficient, and corrosion weight loss in sulfuric acid were measured and evaluated by the following methods.

(1) Measurement of liquidus temperature: 100 g of feedstock metal having the composition of each alloy was melted by heating to about 1500°C in an argon stream using an electric furnace, and then the alloy was slowly cooled in the furnace, and the melting temperature was determined by a thermal analysis method in which the temperature of the alloy is continuously measured. That is, a thermal analysis curve was drawn by a recorder connected to a thermocouple inserted in the center of the molten metal, and the liquidus temperature was read from the cooling curve.
(2) Measurement of Wettability spreading coefficient: The alloy of each of the examples was melted under argon gas atmosphere in an electric furnace, and the molten metal was cast into a graphite mold to obtain a rod-shaped cast piece of 5 mm *ϕ* , and the cast piece was cut to produce a brazing filler metal sample having a weight of about 0.5 g. Next, as shown in FIG. 1(a), the brazing filler metal sample was placed on the SUS304 stainless steel base material and subjected to brazing heat treatment at 980°C for 30 minutes in a vacuum of 10⁻² to 10⁻¹ Pa (hereinafter referred to as brazing).

After brazing, as shown in FIG. 1(b), the area S in which the brazing filler metal melts and spreads was measured, and the value obtained by dividing the area S by the cross-sectional area So of the sample before brazing, that is, the Wettability spreading coefficient W (=S/So) was calculated and used as an index of the wettability of the brazing filler metal to the SUS304 stainless steel base material.

(3) Measurement of corrosion weight loss in sulfuric acid: The each of feedstock metals were melted in the same manner as in (1) above, and the molten metal was cast into a shell mold, and the obtained cast piece was processed into a piece having a size of about 10×10×20 mm to prepare a test piece. Next, 1% sulfuric acid aqueous solution was prepared in a 300 cc beaker, a test piece was placed in the solution, and a corrosion test was conducted by a total immersion method. The test conditions were a test temperature of 80°C and a test time of 6 hours. Then, the amount of mass reduction per unit area and unit time before and after the test was calculated and defined as the corrosion weight loss (mg/m²·s), and the corrosion resistance against sulfuric acid was evaluated.
The evaluation indexes are shown below.
"Corrosion weight loss ≦ 0.50 mg/m²·s: ○"
"Corrosion weight loss > 0.50 mg/m²·s: ×"

Examples of the present invention are shown in Table 1, and comparative examples are shown in Tables 2 and 3.

**[Table 1]**

| Example No. | Chemical composition (mass%) | | | | | | | | | | Liquidus temperature (°C) | Brazing at 980°C Spreading coefficient, W | Sulfuric acid-resistance |
|---|---|---|---|---|---|---|---|---|---|---|---|---|---|
| | Ni | Cr | P | B | Cu | Mo | Si | Co | Fe | Mn | | | |
| 1 | 72.6 | 11.5 | 8.2 | 0.5 | 5.0 | 1.0 | 1.2 | - | - | - | 960 | 16.8 | ○ |
| 2 | 72.8 | 8.0 | 7.0 | 1.3 | 8.0 | 2.0 | 0.9 | - | - | - | 920 | 26.0 | ○ |
| 3 | 77.0 | 8.5 | 8.2 | 0.8 | 2.2 | 1.8 | 1.5 | - | - | - | 900 | 21.6 | ○ |
| 4 | 71.9 | 10.0 | 9.0 | 1.0 | 7.0 | 0.0 | 1.1 | - | - | - | 940 | 20.7 | ○ |
| 5 | 70.3 | *13.0* | 9.8 | 0.2 | 5.5 | 0.9 | 0.3 | - | - | - | 935 | 17.6 | ○ |
| 6 | 67.8 | 16.5 | 8.0 | 0.6 | 5.0 | 1.1 | 1.0 | - | - | - | 970 | 11.9 | ○ |
| 7 | 71.9 | 11.5 | 7.8 | 0.5 | 5.0 | 0.9 | 2.4 | - | - | - | 920 | 19.4 | ○ |
| 8 | 71.8 | 11.5 | 8.1 | 0.4 | 4.8 | 2.2 | 1.2 | - | - | - | 975 | 14.4 | ○ |
| 9 | 69.5 | 11.5 | 8.1 | 0.9 | 4.8 | 4.0 | 1.2 | - | - | - | 950 | 14.4 | ○ |
| 10 | 67.0 | 11.5 | 8.1 | 0.4 | 4.8 | 7.0 | 1.2 | - | - | - | 950 | 10.2 | ○ |
| 11 | 63.0 | 17.5 | 9.4 | 0.6 | 2.0 | 7.5 | 0.0 | - | - | - | 920 | 10.2 | ○ |
| 12 | 66.6 | 12.5 | 9.4 | 0.5 | 2.5 | 8.5 | 0.0 | - | - | - | 900 | 13.5 | ○ |
| 13 | 62.8 | 14.5 | 9.1 | 0.6 | 3.0 | 7.0 | 0.0 | 3.0 | - | - | 920 | 10.3 | ○ |
| 14 | 72.6 | 11.5 | 7.8 | 0.5 | *4.0* | 0.9 | 1.2 | - | 1.5 | - | 980 | 13.5 | ○ |
| 15 | 75.0 | 8.5 | 8.2 | 0.8 | 2.2 | 1.8 | 1.5 | - | - | 2.0 | 890 | 10.3 | ○ |
| 16 | 66.3 | 10.0 | 9.2 | 0.4 | 6.5 | 0.0 | 1.1 | 4.5 | - | 2.0 | 920 | 11.2 | ○ |
| 17 | 65.8 | 15.0 | 8.5 | 0.6 | 4.5 | 1.1 | 1.0 | - | 1.0 | 2.5 | 960 | 10.5 | ○ |
| 18 | 66.9 | 11.5 | 8.5 | 0.4 | 6.0 | 2.0 | 1.2 | 1.0 | 0.5 | 2.0 | 920 | 10.8 | ○ |

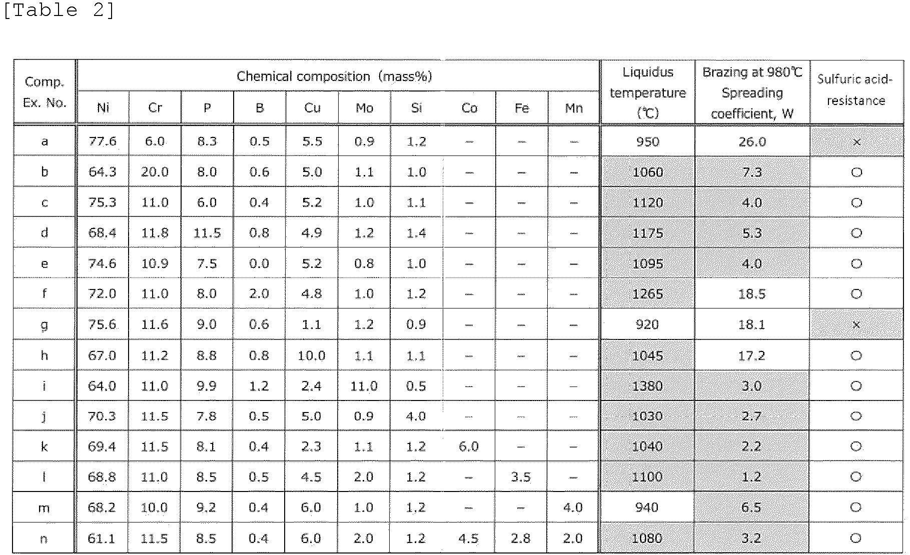

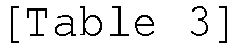

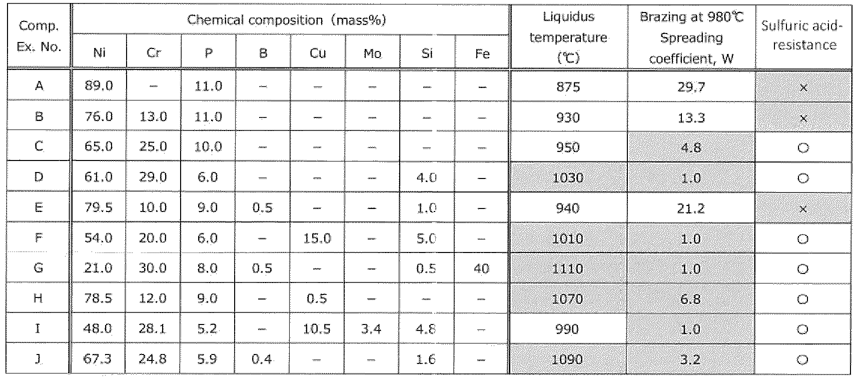

The alloy No. 1 to 18 shown in Table 1 are examples of the present invention, all of which have a liquidus temperature of 1000°C or less. In addition, the Wettability spreading coefficients of all of these alloys show a value of 10 or more, and it is found that the example alloys of the present invention are also excellent in wettability.

Furthermore, with regard to sulfuric acid corrosion resistance, all of the corrosion weight loss under the test conditions was 0.50 mg/m²· s or less, and it is found that the example alloys of the present invention have good corrosion resistance against sulfuric acid.

On the other hand, in the alloys shown in Table 2, (a) to (n) are brazing filler metal having the compositions outside the range of the alloys of the present invention, and at least one of liquidus temperature, Wettability spreading coefficient, and sulfuric acid resistance do not meet target values. Specifically, (a) and (b) are those in which the amount of Cr is outside the scope of the claims, (c) and (d) are those in which the amount of P is outside the scope of the claims, (e) and (f) are those in which the amount of B is outside of the scope of the claims, (g) and (h) are those in which the amount of Cu is outside of the scope of the claims, (i) is that in which the amount of Mo exceeds the upper limit of the claimed range, (j) is that in which the amount of Si exceeds the upper limit of the claimed range, and all of these alloys does not meet at least one of the target properties. The alloys (k), (l) and (m) are those in which the amount of Co, Fe or Mn exceeds the upper limit of the claimed range respectively, and (n) is that in which the sum of Co, Fe and Mn exceeds the upper limit of the claimed range, and they do not meet at least one of the target properties.

Comparative example brazing filler metals (A), (B) and (C) shown in Table 3 have conventional nickel brazing filler metal compositions defined by JIS and AWS standards. Comparative example brazing filler metals (D) to (J) are the prior art nickel brazing filler metals described in "JP 3168158 B", "JP 2007-75867 A", "JP 2009-202198 A", "JP 2011-110575 A","JP 2012-55914 A, "WO 2015/156066," and "JP 2017-131968 A", respectively.

All of these brazing filler metals shown in Table 3 does not satisfy at least one of the target values of liquidus temperature, Wettability spreading coefficient, and corrosion resistance against sulfuric acid.

The nickel brazing filler metal of the present invention (example alloys) exhibits good wettability to various stainless steel base materials, and also shows good brazing ability not only in brazing atmosphere of vacuum, but also in reducing hydrogen atmosphere and inert argon atmosphere.

### INDUSTRIAL APPLICABILITY

As described in detail above, the nickel brazing filler metal of the present invention has a melting temperature of 1000°C or less, is excellent in Wettability during brazing, and exhibits good corrosion resistance against acids such as sulfuric acid, therefore, it is suitable for joining (brazing) to various stainless steel parts, and can be widely used not only for refrigerant evaporators, condensers, and water heaters applications, but also for heat exchangers related to the environment and energy.

### EXPLANATIONS OF LETTERS OR NUMERALS

So: Cross-sectional area of brazing filler metal sample
S: Spreading area of alloy after brazing
W: Wettability spreading coefficient (S/So)
1: Base material (SUS304 stainless steel)
2: Brazing filler metal sample before brazing (*ϕ*5mm, about 0.5g)
3: Brazing filler metal alloy melted and spread after brazing

## Claims

1. A nickel brazing filler metal having a melting temperature of 1000°C or less, exhibiting excellent wet spreading property, and having corrosion resistance against acid, wherein the brazing filler metal contains 8.0 to 19.0 mass% of Cr, 7.0 to 10.5 mass% of P, 0.1 to 1.5 mass% of B, and 2.0 to 8.0 mass% of Cu, a content of Mo is 10.0 mass% or less, a content of Si is 2.5 mass% or less,
and optionally further contains one or more elements selected from the group consisting of Co, Fe and Mn, as elements that do not adversely affect the characteristics of the nickel brazing filler metal, the content of Co being 5.0 mass% or less, the content of Fe being 3.0 mass% or less, the content of Mn being 3.0 mass% or less, and the total content of Co, Fe and Mn being 8.0 mass% or less,
with the remainder being Ni and unavoidable impurities.

## Patentansprüche

1. Nickelhartlot, das eine Schmelztemperatur von 1000°C oder weniger besitzt, hervorragende Benetzungsausbreitungseigenschaften besitzt und Korrosionsbeständigkeit gegenüber Säuren aufweist, wobei das Hartlot 8,0 bis 19,0 Gew.-% Cr, 7,0 bis 10,5 Gew.-% P, 0,1 bis 1,5 Gew.-% B und 2,0 bis 8,0 Gew.-% Cu enthält, der Gehalt an Mo 10,0 Gew.-% oder weniger beträgt, der Gehalt an Si 2.5 Gew.-% oder weniger beträgt,
und gegebenenfalls ferner ein oder mehrere Elemente enthält, ausgewählt aus der Gruppe bestehend aus Co, Fe und Mn, als Elemente, die die Eigenschaften des Nickelhartlots nicht nachteilig beeinflussen, wobei der Gehalt an Co 5,0 Gew.-% oder weniger beträgt, der Gehalt an Fe 3,0 Gew.-% oder weniger beträgt, der Gehalt an Mn 3,0 Gew.-% oder weniger beträgt und der Gesamtgehalt an Co, Fe und Mn 8,0 Gew.-% oder weniger beträgt,
wobei der Rest aus Ni und unvermeidbaren Verunreinigungen besteht.

## Revendications

1. Métal d'apport pour brasage au nickel ayant une température de fusion de 1000 °C ou moins, présentant une excellente propriété d'étalement humide, et ayant une résistance à la corrosion par l'acide, dans lequel le métal d'apport pour brasage contient 8,0 à 19,0 % en masse de Cr, 7,0 à 10,5 % en masse de P, 0,1 à 1,5 % en masse de B, et 2,0 à 8,0 % en masse de Cu, une teneur en Mo est de 10,0 % en masse ou moins, une teneur en Si est de 2,5 % en masse ou moins,
et contient en outre éventuellement un ou plusieurs éléments choisis dans le groupe constitué par Co, Fe et Mn, en tant qu'éléments n'affectant pas négativement les caractéristiques du métal d'apport pour brasage au nickel, la teneur en Co étant inférieure ou égale à 5,0 % en masse, la teneur en Fe étant inférieure ou égale à 3,0 % en masse, la teneur en Mn étant inférieure ou égale à 3,0 % en masse, et la teneur totale en Co, Fe et Mn étant inférieure ou égale à 8,0 % en masse,
le reste étant constitué de Ni et d'impuretés inévitables.
